# EUROPÄISCHE PATENTSCHRIFT

(11) **EP 0 947 779 B1**
(45) Veröffentlichungstag und Bekanntmachung des Hinweises auf die Patenterteilung: **03.03.2004**
(21) Anmeldenummer: 99106032.8
(22) Anmeldetag: 25.03.1999
(51) Int. Cl.: F24D 3/14

(54) **Dämmelement zum Verlegen von Flächen-, insbesondere Fussbodenheizungsrohren**
Insulating element for laying the pipes of a surface, esp. underfloor heating
Elément isolant pour poser les tuyaux d'un chauffage de surface, particulièrement par le sol

(30) Priorität: 03.04.1998 DE 19815023
(43) Veröffentlichungstag der Anmeldung: 06.10.1999
(73) Patentinhaber: Uponor Innovation AB, 513 81 Fristad (SE)
(72) Erfinder: Riesselmann, Franz-Josef, 49393 Lohne (DE)
(74) Vertreter: Hilleringmann, Jochen, Dipl.-Ing.

(56) Entgegenhaltungen:
- EP-A- 0 674 136
- DE-U- 29 609 497

## Beschreibung

Die Erfindung betrifft ein Dämmelement zum Verlegen von Flächen-, insbesondere Fußbodenheizungsrohren.

Bei der Installation von Fußbodenheizungen werden Dämmplatten verwendet, die aus einem Wärme- und/oder Trittschalldämmungsstoff und einer Haltenoppen aufweisenden Folie auf der Oberseite des Dämmstoffs bestehen. Diese Art von Dämmelementen haben den Vorteil, daß die Fixierung der Rohre durch Einklemmung zwischen jeweils benachbarten Haltenoppen integraler Bestandteil der Plattenelemente ist. Es muß allerdings dafür gesorgt werden, daß die Haltenoppen beim Begehen der Dämmplatten, wie dies beim Verlegen des Rohres der Fall ist, nicht niedergedrückt oder in sonstiger Weise zerstört werden.

Um die Dämmplatten mit handelsüblichen Schneidwerkzeugen (Klingenmesser o.dgl.) schneiden zu können, ist die die Haltenoppen aufweisende (Ober-)Folie recht dünn ausgebildet. Die dünnwandigen Haltenoppen würden den Belastungen beim Begehen der Dämmplatten nicht standhalten können. Daher weist die Dämmaterialschicht der Dämmplatten der Form der Noppen der Folie entsprechend geformte Vorsprünge auf, über die die Noppenfolie übergestülpt wird. Die Noppen sind dadurch nicht mehr hohl sondern mit (Dämm-)Material ausgefüllt, was die zur Begehung der Platten erforderliche Stabilität hervorruft (siehe DE-U-29609497).

Die Herstellung von Dämmplatten mit strukturierter, d.h. Vorsprüngen aufweisender Dämmschicht ist jedoch mit erhöhten Kosten (Formkosten) verbunden. Bezüglich der Herstellungskosten günstiger wäre es, wenn als Dämmaterial handelsübliches Tafelmaterial, d.h. in Platten geschnittener Blockschaum eingesetzt werden kann. Wird jedoch auf derartiges Tafelmaterial eine mit Noppen versehene Oberfolie aufgelegt, so sind die zur Dämmschicht hin offenen Noppen hohl; eine Begehbarkeit der Oberfolie kann dann nur dadurch erreicht werden, daß die Materialstärke der Noppenfolie erhöht wird. Das wiederum hat den Nachteil, daß die Dämmplatte nicht mehr leicht zu zerschneiden ist.

Der Erfindung liegt die Aufgabe zugrunde, ein Dämmelement zum Verlegen von Flächen-, insbesondere Fußbodenheizungsrohren zu schaffen, das mit Halteelementen zum klemmenden Halten der Rohre versehen ist und bei hoher Trittfestigkeit dennoch einfach zu zerschneiden ist.

Zur Lösung dieser Aufgabe wird mit der Erfindung ein Dämmelement zum Verlegen von Flächenheizungsrohren, insbesondere Fußbodenheizungsrohren vorgeschlagen, das versehen ist mit
- einer Platte aus einem Wärme- und/oder Trittschalldämmaterial und
- einer auf der Platte angeordneten Folie mit in dieser ausgebildeten Haltevorsprüngen zum klemmenden Halten von Rohren, wobei
- die Folie aus einem geschäumten Kunststoffmaterial besteht und
- die Haltevorsprünge gesamthaft hohl sind.

Das erfindungsgemäße Dämmelement weist eine Platte aus einem Wärme- und/oder Trittschalldämmaterial auf, auf deren Oberseite eine Oberfolie angeordnet ist, die mit zur Platte hin offenen Haltevorsprüngen zum klemmenden Halten von Rohren versehen ist. Die Platte aus Wärmeund/oder Trittschalldämmaterial weist an ihrer Oberseite keine die einseitig offenen Haltevorsprünge der Oberfolie vollständig ausfüllenden Vorsprünge auf. Die Haltevorsprünge sind also gänzlich bzw. zumindest teilweise hohl. Zur Erzielung der erforderlichen Trittfestigkeit wird als Material für die Oberfolie ein geschäumtes Polyolefinmaterial, insbesondere ein Thermoplast-, Elastomer- oder Duroplastmaterial verwendet. Insbesondere ist an ein geschäumtes Polypropylen-, Polyethylen- oder Polystyrolmaterial gedacht.

Wie sich durch Versuche herausgestellt hat, lassen sich mit geschäumten Thermoplastmaterialien Oberfolien herstellen, deren Haltevorsprünge in hohem Maße stabil sind, so daß die mit einer derartigen Oberfolie abgedeckte Dämmplatte begehbar ist. Trotz hoher Trittfestigkeit und guter Klemmwirkung läßt sich die Oberfolie durch einfache Schneidwerkzeuge wie Klingenmesser o.dgl. zerschneiden. Ferner ist die geschäumte Oberfolie ausreichend elastisch, so daß sie bei den beim Installieren auftretenden Biegebeanspruchungen nicht bricht.

Vorzugsweise weist das geschäumte Kunststoffmaterial der Oberfolie ein Raumgewicht von zumindest 100 kg/m³ bis 150 kg/m³ auf. Insbesondere kann das Raumgewicht bis zu 150 kg/m³ bis 300 kg/m³ betragen. Idealerweise beträgt das Raumgewicht des geschäumten Kunststoffmaterials der Oberfolie etwa 200 kg/m³.

Die Verbindung der Oberfolie mit der Dämmplatte erfolgt vorzugsweise durch Verkleben, wobei insbesondere ein Haftkleber eingesetzt wird. Die Verwendung des Haftklebers hat den Vorteil, daß die Oberfolie bei der Installation von der Dämmplatte abgenommen werden kann, um nach Umpositionierung o.dgl. anderweitiger Anordnung wieder mit der Dämmplatte verbunden werden zu können. Alternativ zu einer lösbaren und wiederverwendbaren Klebeverbindung kommen lösbare und wiederverwendbare mechanische Verbindungstechniken in Frage, wie beispielsweise ein Klettenverschluß oder zweiteilige mechanische Verbindungsvorrichtungen, bei denen von einer Basis abstehende Verhakungselemente mit Hinterschnitten zusammenwirken.

Auf der dem Dämmaterial zugewandten Unterseite der Oberfolie kann diese mit integralen Befestigungsvorsprüngen (Dorne o.dgl.) versehen sein, die sich beim Auflegen der Oberfolie auf das darunter befindliche Dämmaterial mit diesem verkrallen bzw. in dieses eindrücken und auf diese Weise die Oberfolie an dem Dämmaterial halten.

Der Vorteil des erfindungsgemäßen Dämmelements besteht darin, daß bei Gewährleistung eines einfachen Zerschneidens der Oberfolie das Dämmelement dennoch trittfest ist, die Haltevorsprünge der Oberfolie also ausreichend stabil sind. Diese Stabilität ist neben der Forderung der Trittfestigkeit auch im Hinblick auf die Klemmwirkung für die Rohre von Bedeutung. Ferner läßt sich Tafel- bzw. Blockmaterial beispielsweise aus EPS als Dämmaterialplatte verwenden. Derartige Tafel- bzw. Blockmaterialien sind kostengünstig herstellbar, da die zu ihrer Herstellung erforderlichen Formen einen denkbar einfachen Aufbau aufweisen.

Die Herstellung der geschäumten Kunststoff-Oberfolie des erfindungsgemäßen Dämmelements erfolgt vorzugsweise durch Tiefzieh- oder Blasverfahren. Beim Tiefziehverfahren kann das Kunststoffmaterial alternativ im nicht geschäumten oder geschäumten Zustand in die Tiefziehform eingebracht werden. Im erstgenannten Fall erfolgt das Aufschäumen in dem Tiefziehwerkzeug, nachdem der Tiefziehvorgang abgeschlossen ist. Im zuvor beschriebenen zweiten Fall kann das bereits geschäumte Material in dem Tiefziehwerkzeug tiefgezogen werden.

Beim Blasverfahren wird der geschäumte Materialschmelzeschlauch in ein diesen allseitig umgebendes Werkzeug eingeführt und anschließend von innen Druckluft in den Schmelzeschlauch gegeben. Dabei schmiegt sich der Schlauch an die Werkzeuginnenwand an, die zur Erzeugung einseitig offener Haltevorsprünge entsprechend strukturiert ist. Nach der Erstarrung wird das im Querschnitt polygonale geschäumte Blasteil längs der Kanten zerschnitten, so daß mehrere (im Falle eines Schmelzeschlauches mit Rechteckquerschnitt vier) Folien entstehen.

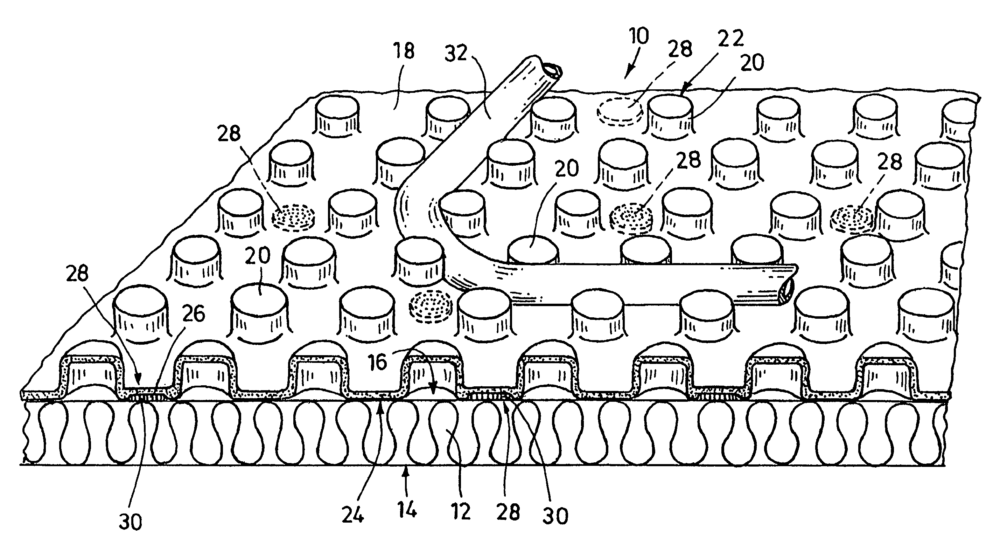

Nachfolgend wird anhand der Zeichnung ein Ausführungsbeispiel der Erfindung näher erläutert.

In der Zeichnung ist perspektivisch und teilweise geschnitten sowie weggebrochen ein Dämmelement für die Verlegung von Fußbodenheizungsrohren gezeigt. Das Dämmelement 10 weist eine Platte 12 aus beispielsweise Polystyrol auf, die zueinander parallele und im wesentlichen ebene Unter- und Oberseiten 14,16 aufweist. Auf der Oberseite 16 der Platte 12 befindet sich eine Oberfolie 18, die eine Vielzahl von insbesondere regelmäßig angeordneten napfförmigen runden oder andere geometrische Formen aufweisende Haltenoppen 20 aufweist. Die Haltenoppen 20 sind an ihren oberen Enden 22 geschlossen und zur Dämmplatte 12 hin offen. An der der Dämmplatte 12 zugewandten Unterseite 24 der Oberfolie 18 befinden sich über die Oberfolie 18 verteilt angeordnete Befestigungselemente 26 einer zweiteiligen lösbaren Befestigungsvorrichtung 28, deren zweites Element 30 an der Oberseite 16 der Dämmplatte 12 befestigt ist. Bei den mechanischen Befestigungsvorrichtungen 28 handelt es sich insbesondere um Klettenverschlüsse oder andere Verbindungssysteme, die auf dem Prinzip der Verhakung von ineinandergreifenden Verhakungselementen basieren. Die an der Oberfolie 18 befestigten Elemente 26 der Befestigungsvorrichtungen 28 können auch in zur Dämmplatte 12 hin offenen Vertiefungen der Oberfolie 18 angeordnet sein, damit die Oberfolie 18 trotz Verwendung der Befestigungsvorrichtungen 28 direkt auf der Dämmplatte 12 aufliegt. Alternativ dazu können die an der Dämmplatte 12 befestigten Befestigungselemente 30 in Vertiefungen auf der Oberseite 16 der Dämmplatte 12 angeordnet sein.

Bei dem Material der Oberfolie 18 handelt es sich um ein geschäumtes Polypropylen mit einem Raumgewicht von etwa 200 kg/m³. Trotz hohler Ausbildung der Haltenoppen 20 ist die Oberfolie 18 begehbar, wobei sie weiterhin mit einfachen Schneidwerkzeugen wie Klingenmesser o.dgl. schneidbar bleibt. Die hohe Stabilität, die das geschäumte Polypropylen den Haltenoppen 20 verleiht, führt auch zu einer guten Klemmwirkung auf ein zwischen den Haltenoppen 20 klemmend gehaltenen Rohr 32.

## Patentansprüche

1. Dämmelement zum Verlegen von Flächen-, insbesondere Fußbodenheizungsrohren, mit
- einer Platte (12) aus einem Wärme- und/oder Trittschalldämmaterial und
- einer auf der Platte (12) angeordneten Folie (18) mit in dieser ausgebildeten Haltevorsprüngen (20) zum klemmenden Halten von Rohren (32),
**dadurch gekennzeichnet ,**
- **daß** die Folie (18) aus einem geschäumten Kunststoffmaterial besteht und
- **daß** sämtliche Haltevorsprünge (20) hohl sind.

2. Dämmelement nach Anspruch 1, **dadurch gekennzeichnet, daß** das geschäumte Kunststoffmaterial der Folie (18) ein Raumgewicht von zumindest 100 kg/m³ bis 150 kg/m³ und vorzugsweise bis zu 150 kg/m³ bis 300 kg/m³ aufweist.

3. Dämmelement nach Anspruch 1 oder 2, **dadurch gekennzeichnet, daß** das geschäumte Kunststoffmaterial Polyolefin, insbesondere ein Polypropylen-, Polyethylen- oder Polystyrolmaterial aufweist.

4. Dämmelement nach einem der Ansprüche 1 bis 3, **dadurch gekennzeichnet, daß** die Folie (18) mit der Platte (12) lösbar verbunden ist.

5. Dämmelement nach Anspruch 4, **dadurch gekennzeichnet, daß** die Folie (18) mit der Platte (12) mittels eines Haftklebers verbunden ist.

6. Dämmelement nach Anspruch 4, **dadurch gekennzeichnet, daß** die Folie (18) mit der Platte (12) mittels einer mechanischen Verbindungsvorrichtung (28) verbunden ist.

## Claims

1. Insulating element for laying the pipes of surface heatings, especially underfloor heatings, comprising
- a plate (12) made of a heat and/or impact sound insulating material and
- a foil (18) arranged on the plate (12) and having retaining projections (20) for clampingly retaining pipes (32),
**characterized in that**
- the foil (18) is made of foamed plastics material and
- all of the retaining projections (20) are hollow.

2. Insulating element of claim 1, wherein the foamed plastics material of the foil (18) has a specific gravity of at least 100 kg/m³ to 150 kg/m³ and preferably of up to 150 kg/m³ to 300 kg/m³.

3. Insulating element of claim 1 or 2, wherein the foamed plastics material includes polyolefin, especially a polypropylene, a polyethylene or a polystyrene material.

4. insulating element of one of claims 1 to 3, wherein the foil (18) is releasably attached to the plate (12).

5. insulating element of claim 4, wherein the foil (18) is attached to the plate (12) by means of a pressure sensitive adhesive.

6. Insulating material of claim 4, wherein the foil (18) is attached to the plate (12) by means of a mechanic connecting means (28).

## Revendications

1. Elément d'isolation pour la pose de tubes de chauffage de surface, en particulier tubes de chauffage dans le sol, comprenant :
- une plaque (12) en matériau d'isolation thermique et/ou en matériau amortissant les bruits d'impact ; et
- une feuille (18) agencée sur la plaque (12) avec des saillies de maintien (20) réalisées dans celle-ci pour le maintien de tubes (32) par serrage,
**caractérisé en ce que** :
- la feuille (18) se compose d'une matière plastique moussée ; et
- les saillies de maintien (20) sont toutes creuses.

2. Elément d'isolation selon la revendication 1, **caractérisé en ce que** la matière plastique moussée de la feuille (18) présente un poids volumique d'au moins 100 kg/m³ à 150 kg/m³ et de préférence jusqu'à 150 kg/m³ à 300 kg/m³.

3. Elément d'isolation selon l'une ou l'autre des revendications 1 et 2,
**caractérisé en ce que** la matière plastique moussée comprend de la polyoléfine, en particulier un matériau à base de polypropylène, de polyéthylène ou de polystyrène.

4. Elément d'isolation selon l'une des revendications 1 à 3, **caractérisé en ce que** la feuille (18) est reliée de manière détachable à la plaque (12).

5. Elément d'isolation selon la revendication 4, **caractérisé en ce que** la feuille (18) est reliée à la plaque (12) au moyen d'une colle adhésive.

6. Elément d'isolation selon la revendication 4, **caractérisé en ce que** la feuille (18) est reliée à la plaque (12) au moyen d'un dispositif de liaison mécanique (28).
